# EUROPEAN PATENT SPECIFICATION

(11) **EP 4 437 801 B1**
(45) Date of publication and mention of the grant of the patent: **12.08.2026**
(21) Application number: 22899093.3
(22) Date of filing: 25.11.2022
(51) Int. Cl.: H04W 76/40, H04W 4/06, H04L 67/14, H04W 80/02, H04L 67/141, H04W 72/30

(54) **METHODS AND SYSTEMS FOR SERVICE DATA ADAPTATION PROTOCOL ENTITY MANAGEMENT IN A WIRELESS COMMUNICATION SYSTEM**
VERFAHREN UND SYSTEME ZUR VERWALTUNG EINER DIENSTDATENANPASSUNGSPROTOKOLLEINHEIT IN EINEM DRAHTLOSEN KOMMUNIKATIONSSYSTEM
PROCÉDÉS ET SYSTÈMES DE GESTION D'ENTITÉ DE PROTOCOLE D'ADAPTATION DE DONNÉES DE SERVICE DANS UN SYSTÈME DE COMMUNICATION SANS FIL

(30) Priority: 26.11.2021 IN 202141054763; 09.11.2022 IN 202141054763
(43) Date of publication of application: 02.10.2024
(73) Proprietor: Samsung Electronics Co., Ltd., Suwon-si, Gyeonggi-do 16677 (KR)
(72) Inventor: SHRIVASTAVA, Vinay Kumar, Bangalore Karnataka 560037 (IN); BAEK, Sangkyu, Suwon-si Gyeonggi-do 16677 (KR)
(74) Representative: Gulde & Partner
(86) International application number: PCT/KR2022/018866
(87) International publication number: WO 2023/096411

(56) References cited:
- WO-A1-2021/109429
- WO-A1-2021/158012
- WO-A1-2021/168257
- KR-A- 20210 035 043
- HUAWEI, HISILICON: "38.331 running CR for NR MBS", 3GPP DRAFT; R2-2108970, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic Meeting; 20210809 - 20210827, 10 September 2021 (2021-09-10), Mobile Competence Centre ; 650, route des Lucioles ; F-06921 Sophia-Antipolis Cedex ; France, XP052051374

## Description

### [Technical Field]

The disclosure relates generally to wireless (or, mobile) communication system. More specifically, the disclosure relates to service data adaptation protocol (SDAP) entity management in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Publication "38.331 running CR for NR MBS" to Huawei et al. (3GPP document R2-2108970) suggests introducing MBS support in NR.

### [Disclosure of Invention]

### [Technical Problem]

There are needs to enhance procedures for service data adaptation protocol entity management in a wireless communication system.

### [Solution to Problem]

The invention is defined by the appended claims. The description that follows is subjected to this limitation. Any disclosure lying outside the scope of said claims is only intended for illustrative as well as comparative purposes. Accordingly, the embodiments herein provide methods and systems for managing the SDAP entity of Multicast Broadcast Services (MBS) for New Radio (NR), a 5th generation Radio Access Technology (RAT) by specifying the procedures for SDAP entities establishment and SDAP entities release.

Accordingly the embodiments herein provide a method for managing one or more Service Data Adaptation Protocol (SDAP) S), the method comprises receiving, by a User Equipment (UE), a Radio Resource Control (RRC) reconfiguration message from a network node for at least one of establishment, modification and release of the one or more Multicast Broadcast Services Radio Bearers (MRBs); and performing, by the UE, at least one of the establishment and the release of the one or more SDAP entities for one or more MBS session identities, based on one or more multicast MRBs in the RRC reconfiguration message.

According to the embodiments herein, for establishing one or more SDAP entities, the UE receives a configuration from the network node to perform one of addition or modification of the one or more multicast MRBs through RadioBearerConfig in the RRC reconfiguration message, when the one or more multicast MRBs are newly established, wherein identity of the one or more multicast MRBs in the RRC reconfiguration message is different from an existing configuration of the UE. The UE associates each of the established one or more multicast MRBs with a corresponding MBS session identity, if the one or more multicast MRBs was configured with the same MBS session identity prior to receiving the RRC reconfiguration message. The UE indicates the establishment of the one or more multicast MRBs and the corresponding MBS session identity to at least one upper layer. The UE establishes an SDAP entity for the corresponding MBS session identity, if an SDAP entity with the received MBS session identity does not exist. The UE indicates establishment of user plane resources for the corresponding MBS session identity to the at least one upper layer. The one or more SDAP entities receives a Downlink (DL) SDAP data Packet Data Unit (PDU) from at least one lower layer for a Quality of Service (QoS) flow and retrieves at least one SDAP Service Data Unit (SDU) from the Downlink (DL) SDAP data PDU.

According to the embodiments herein, for performing the release of the one or more SDAP entities for one or more MBS session identities, the UE receives a configuration from the network node to remove the one or more multicast MRBs through RadioBearerConfig in the RRC reconfiguration message. The UE releases one or more multicast sessions and the one or more SDAP entities that have no associated multicast MRBs. The UE performs at least one of indicating the release of the one or more SDAP entities to the at least one upper layer and indicating release of user plane resources for the one or more MBS sessions to the at least one upper layer.

According to the embodiments herein, for releasing the one or more SDAP entities, in case of a full configuration being received, the UE receives a a full configuration in the RRC reconfiguration message. The UE releases the one or more SDAP entities for each of the MBS session identities which are part of current UE configuration and releasing each of the one or more multicast MRBs associated with the one or more MBS session identities which are part of current UE configuration. For each of the one or more MBS session identities that is part of existing configuration of the UE but not added with the same MBS session identity in the one of the addition, or the modification of the one or more multicast MRBs in the RRC reconfiguration message, the UE performs one of indicating the release of user plane resources for the one or more MBS session identities to at least one upper layer after successful reconfiguration with sync, if procedure is triggered due to reconfiguration with sync and indicating the release of the user plane resources for the one or more MBS session identities to the at least one upper layer immediately, if the release is not triggered due to reconfiguration with sync.

According to embodiments herein, for managing the one or more SDAP entities, a network node indicates if a multicast session is deactivated through one of the RRC reconfiguration message or a Medium Access Control (MAC) Element (CE). The UE either releases or retains pertinent one or more SDAP entities, if the multicast session is deactivated.

According to embodiments herein, for managing the one or more SDAP entities in case of the UE transitioning to RRC_INACTIVE state from RRC_CONNECTED state, the network node indicates in one of the RRC reconfiguration message or RRC Release with suspendConfig message if a multicast session is to be continued or not, when transitioning to the RRC_INACTIVE state from the RRC_CONNECTED state, wherein the UE is receiving the multicast session. The UE retains one or more pertinent SDAP entities and performs one of continuing the one or more multicast MRBs, if multicast session is continued in the RRC_INACTIVE state and suspending the one or more multicast MRBs, if multicast session is not continued in the RRC_INACTIVE state.

According to the embodiments herein, for managing the one or more SDAP entities in case of the UE transitioning to RRC_CONNECTED state from RRC_INACTIVE state, wherein the UE is receiving multicast session, the network node indicates explicitly or implicitly, if a multicast session is to be continued when transitioning to the RRC_CONNECTED state from the RRC_INACTIVE state. The UE continues the one or more multicast MRBs and retaining one or more pertinent SDAP entities.

According to the embodiments herein, for releasing the one or more SDAP entities, the UE releases the one or more SDAP entities for the one or more MBS session identities pertaining to suspended multicast MRBs in the RRC_INACTIVE state or activated multicast MRBs in the RRC_INACTIVE state, when the UE is transitioning from an RRC_INACTIVE to RRC_IDLE state.

According to the embodiments herein, for establishing the one or more SDAP entities in case of configuration for broadcast session, corresponding broadcast MRBs are set up as per configuration available in Multicast Control Channel (MCCH) information comprising MBSBroadcastConfiguration message and the UE is interested to receive MBS broadcast service.

According to the embodiments herein, for releasing the one or more SDAP entities in case of configuration for broadcast session, corresponding broadcast MRBs are released when one or more configuration is no longer available in Multicast Control Channel (MCCH) information comprising MBSBroadcastConfiguration message or the UE is not interested in receiving.

According to the embodiments herein, for releasing the one or more SDAP entities, the UE releases all established MRBs except broadcast MRBs, all radio resources, including release of Radio Link Control (RLC) entity, Backhaul Adaptation Protocol (BAP) entity, Media Access Control (MAC) configuration and associated Packet Data Convergence Protocol (PDCP) entity and the one or more SDAP entities for all established RBs except broadcast MRBs and Back Haul RLC channels.

Accordingly the embodiments herein provide a User Equipment (UE) for managing one or more Service Data Adaptation Protocol (SDAP) entities of Multicast Broadcast Services for New Radio (NR MBS), the UE configured for: receiving a Radio Resource Control (RRC) reconfiguration message from a network node for at least one of establishment, modification and release of the one or more Multicast Broadcast Services Radio Bearers (MRBs); and performing at least one of the establishment and release for one or more SDAP entities for one or more MBS session identities, based on one or more multicast MRBs in the RRC reconfiguration message.

These and other aspects of the example embodiments herein will be better appreciated and understood when considered in conjunction with the following description and the accompanying drawings. It should be understood, however, that the following descriptions, while indicating example embodiments and numerous specific details thereof, are given by way of illustration and not of limitation. Many changes and modifications may be made within the scope of the example embodiments herein, and the example embodiments herein include all such modifications.

### [Advantageous Effects of Invention]

According to various embodiments of the disclosure, procedures for service data adaptation protocol entity management in a wireless communication system can be efficiently enhanced.

### [Brief Description of Drawings]

Embodiments herein are illustrated in the accompanying drawings, throughout which like reference letters indicate corresponding parts in the various figures. The embodiments herein will be better understood from the following description with reference to the drawings, in which:
FIG. 1 depicts an example scenario showing MBS delivery from a Core Network (CN) to RAN and UE, according to prior arts;
FIG. 2A illustrates a structure of a radio access network of an 5G NR system, according to embodiments herein;
FIG. 2B illustrates an example protocol stack for MBS in NR, according to embodiments as disclosed herein;
FIG. 3 illustrates a method for managing Service Data Adaptation Protocol (SDAP) entities of Multicast Broadcast Services for New Radio (NR MBS), according to embodiments as disclosed herein;
FIG. 4 illustrates a method for SDAP entity establishment, when MRB is added or modified, according to embodiments as disclosed herein;
FIG. 5 illustrates method steps involved in the release of the SDAP entities, according to embodiments as disclosed herein;
FIG. 6 illustrates method steps involved in release of the SDAP entities in case a full configuration is received, according to the embodiments herein;
FIG. 7a illustrates a method for managing SDAP entities by multicast session deactivation, according to embodiments herein;
FIG. 7b illustrates a method for managing SDAP entities when the UE transitions from RRC_CONNECTED state to RRC_INACTIVE state, according to embodiments herein;
FIG. 7c illustrates a method for managing SDAP entities when the UE transitions from to at least one of RRC_IDLE state and RRC_INACTIVE state to RRC_CONNECTED state, according to embodiments herein; and
FIG. 8 depicts the method steps involved in SDAP entity establishment and release operation for the broadcast MBS session, according to embodiments herein.
FIG. 9 illustrates a block diagram of a terminal (or a user equipment (UE), according to embodiments of the present disclosure; and
FIG. 10 illustrates a block diagram of a base station, according to embodiments of the present disclosure.

### [Mode for the Invention]

Before undertaking the DETAILED DESCRIPTION OF DRAWINGS below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

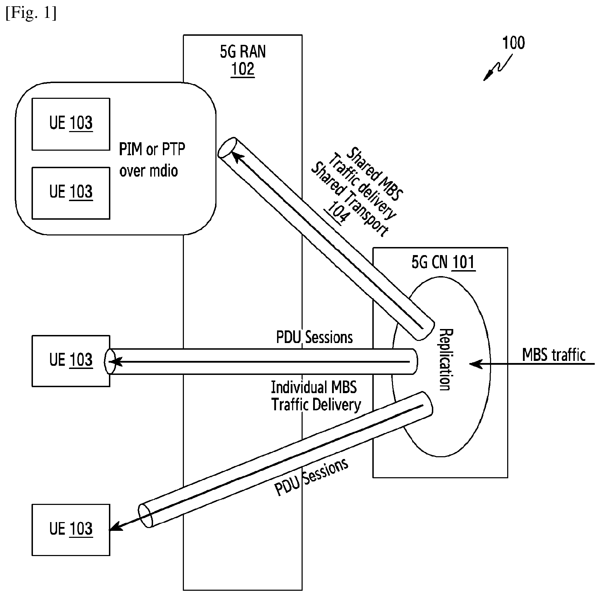

The embodiments herein achieve methods and systems for managing the SDAP entity of Multicast Broadcast Services (MBS) for New Radio (NR), a 5th generation Radio Access Technology (RAT) by specifying the procedures for SDAP entities establishment and SDAP entities release. Referring now to the drawings, and more particularly to FIGS. 1 through 10, where similar reference characters denote corresponding features consistently throughout the figures, there are shown example embodiments.

Embodiments herein disclose SDAP entity management aspects of Multicast Broadcast Services (MBS) for New Radio (NR), a 5th generation Radio Access Technology (RAT). Examples of NR MBS services can be multicast services, or broadcast services. In multicast services, the network transfers common user data that can be received only by a specific group of UEs which have joined the concerned multicast group. In broadcast services, the network transfers common user data that can be received by all the UEs interested to receive the service. The network may provide MBS services in a limited part of the network and coverage area of MBS services can be one cell or larger.

The principal object of the embodiments herein is to disclose methods and systems for managing the Service Data Adaptation Protocol (SDAP) entity of Multicast Broadcast Services (MBS) for New Radio (NR), a 5th generation Radio Access Technology (RAT) by specifying the procedures for SDAP entities establishment and SDAP entities release.

Increase in the usage of services such as video consumption, download of software over wireless networks, Internet of Things (IoT) and the like, support of Multicast Broadcast Services (MBS) in wireless networks is inevitable.

5G Core Network (CN) can deliver MBS user data to the Radio Access Network (RAN) using following delivery methods:
- Individual delivery: For each individual UE receiving the MBS service, the CN delivers separate copies of the MBS user data packets to RAN, i.e., via per-UE PDU sessions, alike in case of unicast delivery, and
- Shared delivery: The CN delivers a single copy of MBS user data to RAN, i.e., via a shared PDU session/tunnel), with RAN handling delivery to one or multiple UEs.

FIG. 1 depicts an example scenario, depicting MBS delivery from CN 101 to RAN 102 and UE 103. In case of shared delivery 104 by the CN 101, the RAN 102 delivers MBS data to UEs 103 using either Point-to-Point delivery (PTP) or Point-to-Multipoint (PTM) delivery. Furthermore, at the UE 103, reception via an MBS radio bearer (MRB) can be supported using:
- a single/common SDAP entity,
- a single/common PDCP entity, and
- a single PTM RLC bearer, a single PTP RLC bearer or a combination, i.e., the UE 103 simultaneously configured with a PTM and a PTP RLC bearer (also referred to as PTM and PTP legs).

More specifically, a UE 103 can be configured with: - A PTM RLC bearer only, - A PTP RLC bearer only, either using RLC Unacknowledged Mode (UM) or RLC Acknowledged Mode (AM), - A split RLC bearer, i.e., both a PTM and PTP RLC bearer, both using RLC UM, and - A split RLC bearer, i.e., both a PTM and PTP RLC bearer, using RLC UM and RLC AM respectively.

SDAP entities are not configured for NR MBS operation to the UE and therefore, the UE is presently not equipped to operate MRBs; e.g., SDAP entities establishment and SDAP entities release.

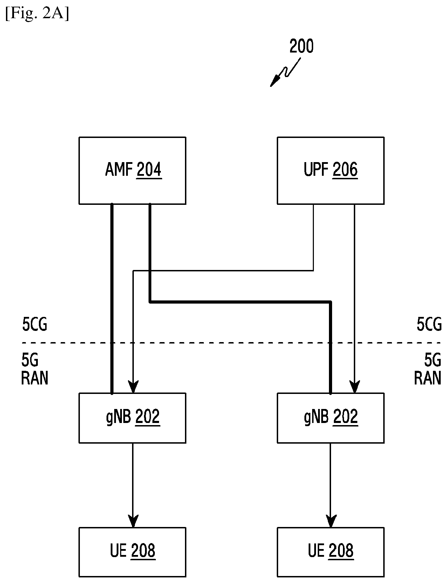

FIG. 2A illustrates a structure of a radio access network 200 of an 5G NR system, according to embodiments herein. The network 200 comprises next generation nodes B (gNBs) or base stations 202, a Access and mobility management entity (AMF) 204, and a User Plane Function (UPF) 206. A User Equipment 208 is communicatively coupled to an external network through the gNBs 202 and the UPF 206. The User Equipment (UE) 208 for managing one or more Service Data Adaptation Protocol (SDAP) entities of Multicast Broadcast Services for New Radio (NR MBS), the UE configured for: receiving a Radio Resource Control (RRC) reconfiguration message from a network node for at least one of establishment, modification and release of the one or more Multicast Broadcast Services Radio Bearers (MRBs); and performing at least one of the establishment and release for one or more SDAP entities for one or more MBS session identities, based on one or more multicast MRBs in the RRC reconfiguration message.

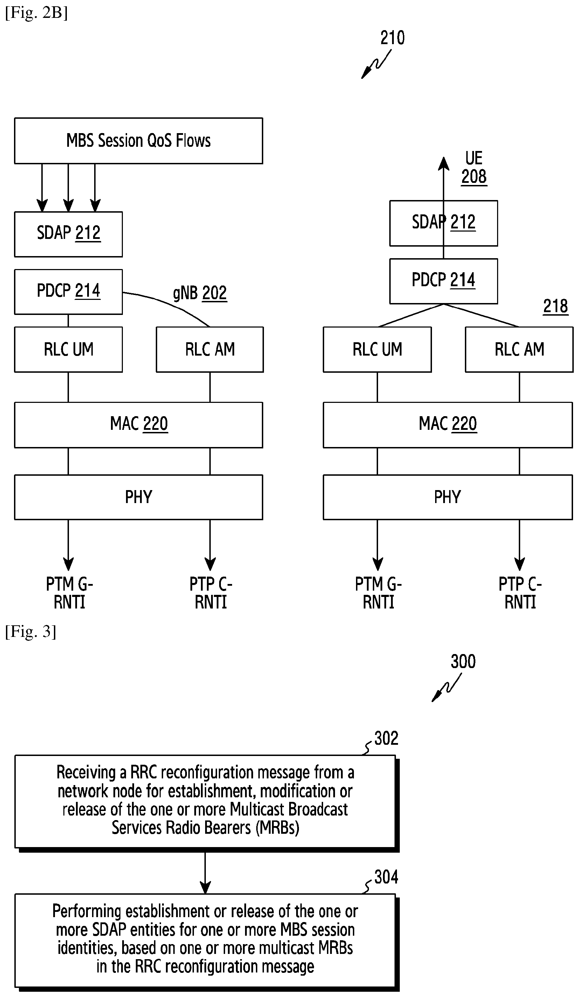

FIG. 2B illustrates an example protocol stack 210 for MBS in NR, according to embodiments as disclosed herein. The protocol stack shows the SDAP 212, PDCP 214, RLC 218, and MAC 220 sublayers for both the UE 208 and gNB 202. The SDAP sublayer 212 is responsible for mapping between a QoS flow and a data radio bearer and marking QoS flow ID in the Downlink for MBS packets. The PDCP sublayer 214 is responsible for functions such as transfer of data, maintenance of PDCP SNs, header compression and decompression, integrity protection and integrity verification, etc, as explained in TS 38.300. RLC sublayers 218 supports three transmission modes namely, transparent mode (TM), Unacknowledged mode (UM), and Acknowledged mode (AM). The function of RLC depends on transmission mode and includes transfer of upper layer PDUs, sequence numbering independent of the one in PDCP, error correction through ARQ, RLC re-establishment, etc, as explained in TS 38.300. Functions of the MAC sublayer 220 includes mapping between logical channels and transport channels, multiplexing/demultiplexing of MAC SDUs belonging to one or different logical channels into/from transport blocks delivered to or from the physical layer on transport channels, etc., as explained in TS 38.300.

As described in TS 37.324, the SDAP sublayer maps QoS flows to DRBs. The SDAP entities are located in the SDAP sublayer and several SDAP entities can be defined for the UE. There is an SDAP entity for each individual PDU session. An SDAP entity either receives or delivers SDAP SDUs from or to upper layers and submits or receives SDAP data PDUs to or from its peer SDAP entity via lower layers. At the transmitting side, when an SDAP entity receives an SDAP SDU from upper layers, it constructs the corresponding SDAP data PDU and submits it to lower layers and at the receiving side, when an SDAP entity receives an SDAP data PDU from lower layers, it retrieves the corresponding SDAP SDU and delivers it to upper layers.

FIG. 3 illustrates a method 300 for managing Service Data Adaptation Protocol (SDAP) entities of Multicast Broadcast Services for New Radio (NR MBS), according to embodiments herein. At step 302, the UE 208 receives a Radio Resource Control (RRC) reconfiguration message from a network node for establishment, modification or release of the one or more Multicast Broadcast Services Radio Bearers (MRBs). The network node can be, for example, but not limited to, an eNB, or a gNB. The terms "gNB" and "network node" have been used interchangeably hereinafter. At step 304, the UE 208 performs the establishment, or the release of the one or more SDAP entities for one or more MBS session identities, based on one or more multicast MRBs in the RRC reconfiguration message.

The various actions in method 300 may be performed in the order presented, in a different order or simultaneously. Further, in some embodiments, some actions listed in FIG. 3 may be omitted.

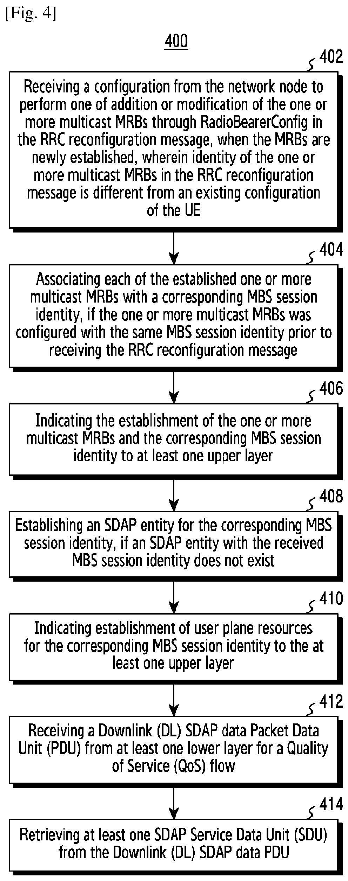

FIG. 4 illustrates a method 400 for SDAP entity establishment, when MRB is added or modified, according to embodiments herein. At step 402, the UE 208 receives a configuration from the network node to perform one of addition or modification of the one or more multicast MRBs through RadioBearerConfig in the RRC reconfiguration message, when the one or more multicast MRBs are newly established, wherein the identity of the one or more multicast MRBs in the RRC reconfiguration message is different from an existing configuration of the UE 208. At step 404, the UE 208 associates each of the established one or more multicast MRBs with a corresponding MBS session identity, if the one or more multicast MRBs was configured with the same MBS session identity prior to receiving the RRC reconfiguration message. At step 406, the UE 208 indicates the establishment of the one or more multicast MRBs and the corresponding MBS session identity to at least one upper layer. At step 408, the UE 208 establishes an SDAP entity for the corresponding MBS session identity, if an SDAP entity with the received MBS session identity does not exist. At step 410, the UE 208 indicates establishment of user plane resources for the corresponding MBS session identity to the at least one upper layer. At step 412, the one or more SDAP entities receives a Downlink (DL) SDAP data Packet Data Unit (PDU) from at least one lower layer for a Quality of Service (QoS) flow. At step 414, the one or more SDAP entities retrieves at least one SDAP Service Data Unit (SDU) from the Downlink (DL) SDAP data PDU.

The various actions in method 400 may be performed in the order presented, in a different order or simultaneously. Further, in some embodiments, some actions listed in FIG. 4 may be omitted.

In an embodiment, the UE 208 establishes an SDAP entity or entities for MBS session identity, e.g., TMGI, when an MRB is added through RadioBearerConfig in the RRC reconfiguration message by the network. This is applicable when the MRB is being newly established, i.e., not when the MRB is being modified. RRC layer indicates to the SDAP layer for the establishment of the pertinent SDAP entity or entities.

An example for the specification is proposed as in below sections as follows:
5.3.5.6.Y Multicast MRB addition/modification: The UE 208 shall for each element in the order of entry in the list mrb-ToAddmodList:
   1> if mrb-Identity value included in the mrb-ToAddModList is not part of the current UE configuration (i.e., multicast MRB establishment including the case when full configuration option is used):
      2> establish a PDCP entity and configure it in accordance with the received pdcp-Config;
      2> if the at least one multicast MRB was configured with the same tmgi (i.e., mbs-SessionId) prior to receiving this reconfiguration:
         3> associate the established multicast MRB with the corresponding tmgi;
      2> else:
         3> indicate the establishment of the multicast MRBs and the tmgi of the established multicast MRBs to upper layers;
            2> if an SDAP entity with the received tmgi (i.e. mbs-SessionId) does not exist:
         3> establish an SDAP entity for the tmgi as specified in TS 37.324, clause 5.1.1;
         3> if an SDAP entity with the received mbs-SessionId did not exist prior to receiving this reconfiguration:
            4> indicate the establishment of the user plane resources for the mbs-SessionId to upper layers;
   1> if mrb-Identity value included in the mrb-ToAddModdList is part of the current UE configuration:
      2> if the reestablishPDCP is set:
         3> if drb-ContinueROHC is included in pdcp-Config:
            4> indicate to lower layer that drb-ContinueROHC is configured;
         3> if drb-ContinueEHC-DL is included in pdcp-Config:
            4> indicate to lower layer that drb-ContinueEHC-DL is configured;
         3> re-establish the PDCP entity of this multicast MRB as specified in TS 38.323, clause 5.1.2;
      2>else, if the recoverPDCP is set:
         3>trigger the PDCP entity of thei MRB to perform data recovery as specified in TS 38.323;
      2> if the pdcp-Config is included:
         3> reconfigure the PDCP entity in accordance with the received pdcp-Config.
5.1.X SDAP entity establishment:
   When RRC (TS 38.331) requests an SDAP entity establishment (e.g., for MRB), the UE 208 shall:
   - establish an SDAP entity;
   - follow the procedures in clause 5.2.1 and 5.2.2.

### 5.2.2. Downlink:

At the reception of an SDAP data PDU from lower layers for a QoS flow, the receiving SDAP entity shall:
- if this SDAP data PDU is received from an MRB:
- retrieve the SDAP SDU from the DL SDAP data PDU as specified in the clause 6.2.2.1.

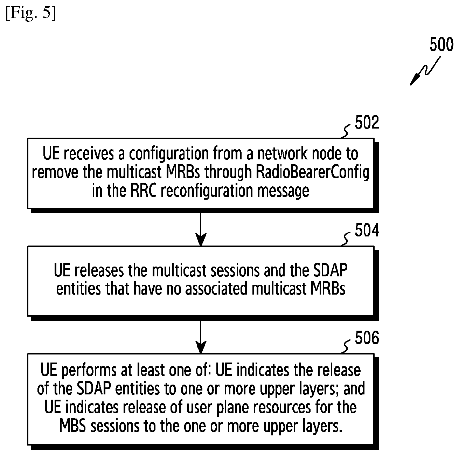

FIG. 5 illustrates method steps 500 involved in the release of the SDAP entities, according to the embodiments herein. In an embodiment, the UE 208 releases an SDAP entity or entities for MBS session identity (e.g., TMGI), when an MRB is removed through RadioBearerConfig in the RRC reconfiguration message by the network. RRC layer indicates to the SDAP layer for the release of the pertinent SDAP entity or entities. At step 502, the UE 208 receives a configuration from a network node to remove the multicast MRBs through RadioBearerConfig in the RRC reconfiguration message. At step 504, the UE 208 releases the multicast sessions and the SDAP entities that have no associated multicast MRBs. At step 506, the UE 208 performs at least one of: indicating the release of the SDAP entities to one or more upper layers; and indicating release of user plane resources for the MBS sessions to the one or more upper layers.

The various actions in method 500 may be performed in the order presented, in a different order or simultaneously. Further, in some embodiments, some actions listed in FIG. 5 may be omitted.

An example for the specification is proposed as in below sections as follows:
5.3.5.6.1 General: The UE 208 shall perform the following actions based on a received RadioBearerConfig IE:
   1> if the RadioBearerConfig includes the srb3-ToRelease:
      2> perform the SRB release as specified in 5.3.5.6.2;
   1> if the RadioBearerConfig includes the srb-ToAddModList or if any DAPS bearer is configured:
      2> perform the SRB addition or reconfiguration as specified in 5.3.5.6.3;
   1> if the RadioBearerConfig include the drb-ToReleaseList:
      2> perform DRB release as specified in 5.3.5.6.4;
   1> if RadioBearerConfig includes the drb-ToAddModList:
      2> perform DRB addition or reconfiguration as specified in 5.3.5.6.5.
   1> if the RadioBearerConfig includes the mrb-ToReleaseList:
      2> perform multicast MRB release as specified in 5.3.5.6.X;
   1> if the RadioBearerConfig includes the mrb-ToAddModList:
      2> perform multicast MRB addition or reconfiguration as specified in 5.3.5.6.Y;
   1> release all SDAP entities, if any, that have no associated DRB as specified in TS 37.324, clause 5.1.2., and indicate the release of the user plane resources for PDU sessions associated with the released SDAP entities to upper layers;
   1> release all multicast sessions and SDAP entities that have no associated multicast MRB as specified in TS 37.324, clause 5.1.2. and indicate the release of user plane resources for these multicast sessions to upper layers.

SDAP entity release (RRC_INACTIVE to RRC_IDLE transition):
In an embodiment, the UE 208 releases an SDAP entity or entities for each MBS session identity (e.g., TMGI) pertaining to suspended multicast MRBs in the RRC_INACTIVE state, when there is transition to RRC_IDLE state (e.g., reception of RRC Release message). The UE 208 releases the one or more SDAP entities for the one or more MBS session identities pertaining to suspended multicast MRBs in the RRC_INACTIVE state or activated multicast MRBs in the RRC_INACTIVE state, when the UE 208 is transitioning from an RRC_INACTIVE to RRC_IDLE state.

In an embodiment, the UE 208 releases SDAP entity or entities for each MBS session identity (e.g., TMGI) that is part of current UE configuration when a full configuration is received. RRC layer indicates to the SDAP layer for the release of the pertinent SDAP entity or entities.

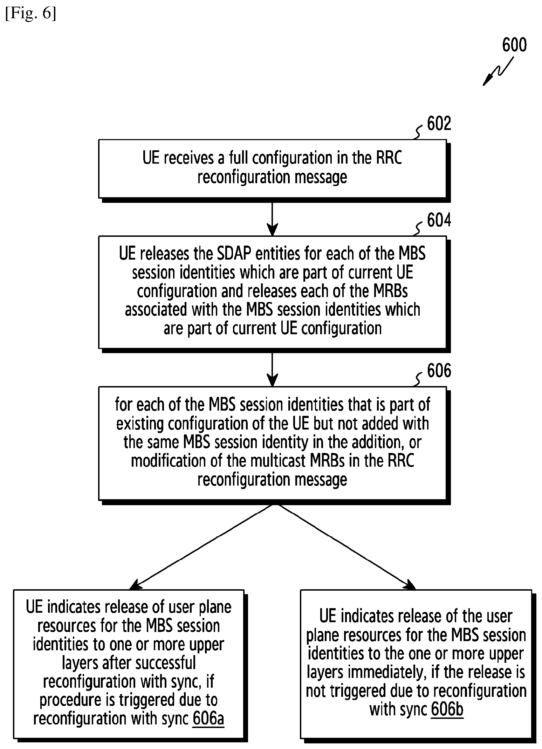

FIG. 6 illustrates method steps 600 involved in release of the SDAP entities in case a full configuration is received, according to the embodiments herein. At step 602, the UE 208 receives a full configuration in the RRC reconfiguration message. At step 604, the UE 208 releases the SDAP entities for each of the MBS session identities which are part of current UE 208 configuration and releases each of the MRBs associated with the MBS session identities which are part of current UE configuration. At step 606, for each of the MBS session identities that is part of existing configuration of the UE 208 but not added with the same MBS session identity in the addition, or modification of the multicast MRBs in the RRC reconfiguration message, at step 606a, the UE 208 indicates release of user plane resources for the MBS session identities to one or more upper layers after successful reconfiguration with sync, if procedure is triggered due to reconfiguration with sync. At step 606b, the UE 208 indicates release of the user plane resources for the MBS session identities to the one or more upper layers immediately, if the release is not triggered due to reconfiguration with sync.

The various actions in method 600 may be performed in the order presented, in a different order or simultaneously. Further, in some embodiments, some actions listed in FIG. 6 may be omitted.

An example for the specification is proposed as in below section as follows:
5.3.5.11 (Full configuration): The UE 208 shall:
   1> release/clear all current dedicated radio configurations except for the following:
      - the MCG C-RNTI;
      - the AS security configurations associated with the master key;
      - the SRB1/SRB2 configurations and DRB/multicast MRB configurations as configured by radioBearerConfig or radioBearerConfig2.
      ...
   1> for each pdu-Session that is part of the current UE configuration:
      2> release the SDAP entity (clause 5.1.2 in TS 37.324);
      2> release each DRB associated with the pdu-Session as specified in 5.3.5.6.4;

NOTE 3: This will retain the pdu-Session but remove the DRBs including drb-identity of these bearers from the current UE configuration. Setup of the DRBs within the AS is described in clause 5.3.5.6.5 using the new configuration. The pdu-Session acts as the anchor for associating the released and re-setup DRB. In the AS, the DRB re-setup is equivalent with a new DRB setup (including new PDCP and logical channel configurations).
1> for each tmgi (i.e. mbs-SessionId) that is part of the current UE configuration and associated to a multicast MRB:
   2> release the SDAP entity (clause 5.1.2 in TS 37.324);
   2> release each multicast MRB associated to the tmgi as specified in 5.3.5.6.X;

NOTE 4: This will retain the tmgi (i.e. mbs-SessionId) but remove the multicast MRBs including mrb-identity of these bearers from the current UE configuration. Setup of the multicast MRBs within the AS is described in clause 5.3.5.6.Y using the new configuration. The tmgi acts as the anchor for associating the released and re-setup multicast MRB setup (including new PDCP and logical channel configurations).
1> for each pdu-Session that is part of the current UE configuration but not added with same pdu-Session in the drb-ToAddModList:
   2> if the procedure was triggered due to reconfiguration with sync:
      3> indicate the release of the user plane resources for the pdu-Session to upper layers immediately;
1> for each tmgi (i.e. mbs-SessionId) that is part of the current UE configuration but not added with the same tmgi in the mrb-ToAddModList:
   2> if the procedure was triggered due to reconfiguration with sync:
      3> indicate the release of the user plane resources for the tmgi to upper layers after successful reconfiguration with sync;
   2> else:
      3> indicate the release of the user plane resources for the tmgi to upper layers immediately.

### 5.1.Y: SDAP entity release:

When the RRC (TS 38.331) requests an SDAP entity release (e.g., for MRB), the UE 208 shall:
- release the SDAP entity.

Explained below are different scenarios involved in the management of SDAP entities.

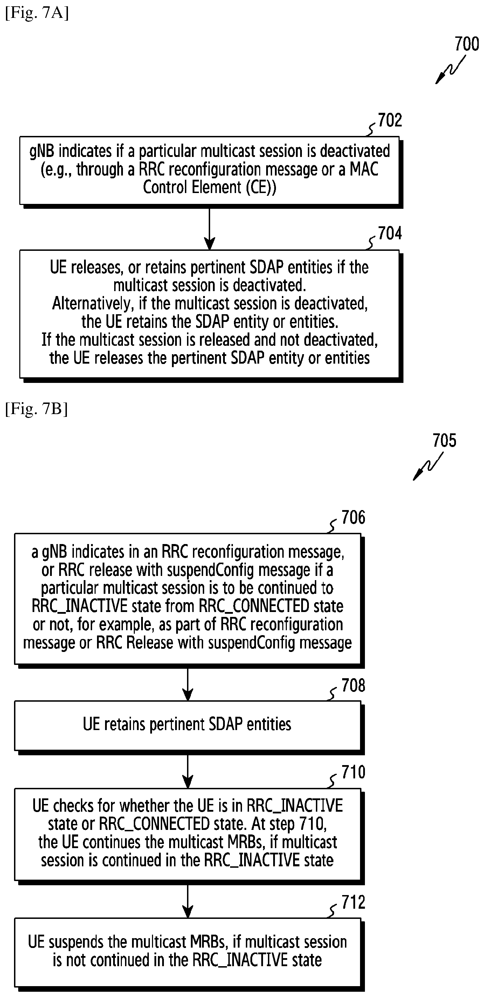

FIG. 7a illustrates a method for managing SDAP entities by multicast session deactivation, according to embodiments herein. In an embodiment, the UE 208 can use the following approaches for the SDAP entity or entities pertaining to the multicast session: At step 702, gNB indicates if a particular multicast session is deactivated (e.g., through a RRC reconfiguration message or a MAC Control Element (CE)). At step 704, the UE 208 releases, or retains pertinent SDAP entities if the multicast session is deactivated. Alternatively, if the multicast session is deactivated, the UE 208 retains the SDAP entity or entities. If the multicast session is released and not deactivated, the UE 208 releases the pertinent SDAP entity or entities.

FIG. 7b illustrates a method 705 for managing SDAP entities when the UE 208 transitions from RRC_CONNECTED state to RRC_INACTIVE state, according to embodiments herein. In an embodiment, the UE 208 can use the following approaches for the SDAP entity or entities pertaining to the multicast session: at step 706, a gNB indicates in an RRC reconfiguration message, or RRC release with suspendConfig message if a particular multicast session is to be continued to RRC_INACTIVE state from RRC_CONNECTED state or not, for example, as part of RRC reconfiguration message or RRC Release message. At step 708, the UE 208 retains pertinent SDAP entities. At step 710, the UE 208 checks for whether the UE 208 is in RRC_INACTIVE state or RRC_CONNECTED state. At step 710, the UE 208 continues the multicast MRBs, if multicast session is continued in the RRC_INACTIVE state. At step 712, the UE 208 suspends the multicast MRBs, if multicast session is not continued in the RRC_INACTIVE state.

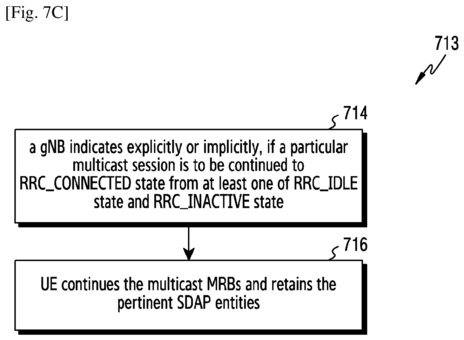

FIG. 7c illustrates a method 713 for managing SDAP entities when the UE 208 transitions from at least one of RRC_IDLE state and RRC_INACTIVE state to RRC_CONNECTED state, according to embodiments herein. In an embodiment, the UE 208 can use the following approaches for the SDAP entity or entities pertaining to the multicast session: when the UE 208 is receiving multicast session, at step 714, a gNB indicates explicitly or implicitly, if a particular multicast session is to be continued to RRC_CONNECTED state from at least one of RRC_IDLE state and RRC_INACTIVE state. At step 716, the UE 208 continues the multicast MRBs and retains the pertinent SDAP entities.

The various actions in methods 700, 705, and 713 may be performed in the order presented, in a different order or simultaneously. Further, in some embodiments, some actions listed in FIGs. 7a, 7b, and 7c may be omitted.

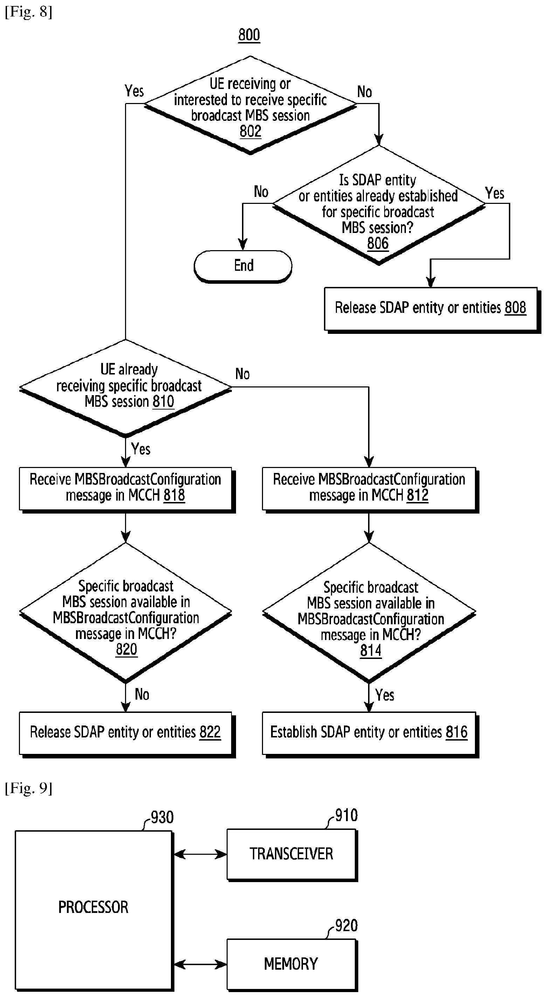

FIG. 8 depicts the method steps 800 involved in SDAP entity establishment and release operation for the broadcast MBS session, according to embodiments herein. In an embodiment, at the time of RRC Release all established radio bearers are released. All established RB covers multicast MRBs, but broadcast MRBs should be excluded. Accordingly, embodiments herein specify as follows:
release all radio resources, including release of the RLC entity, the BAP entity, the MAC configuration and the associated PDCP entity and SDAP for all established RBs except broadcast MRB and BH RLC channels.

At step 802, the UE 208 receives or is interested to receive specific broadcast MBS session. At step 806, the UE 208 checks if the SDAP entities are already established for specific broadcast MBS session. If the SDAP entities have been established, at step 808, the UE 208 releases SDAP entity or entities. At step 810, the UE 208 checks if specific broadcast MBS sessions are already being received. In an embodiment herein, the pertinent SDAP entity or entities for broadcast MBS session are established when the corresponding broadcast MRBs are being setup as per the configuration available in the MCCH information, e.g., MBSBroadcastConfiguration Message and the UE 208 is receiving or interested to receive MBS broadcast. RRC layer indicates to the SDAP layer for the establishment of the pertinent SDAP entity or entities.

At step 812, if the UE 208 is not already receiving specific broadcast MBS session, the UE 208 receives MBSBroadcastConfiguration message in MCCH and at step 814, the UE 208 checks if specific broadcast MBS session is available in MBSBroadcastConfiguration message in MCCH. If yes, at step 816, the UE 208 establishes one or more SDAP entities. At step 818, if the UE 208 is already receiving specific broadcast MBS session, the UE 208 receives MBSBroadcastConfiguration message in MCCH and at step 820, the UE 208 checks if specific broadcast MBS session is available in MBSBroadcastConfiguration message in MCCH. If no, at step 822, the UE 208 releases one or more SDAP entities. Pertinent SDAP entity or entities for broadcast MBS session are released when the corresponding broadcast MRBs are being released as per the broadcast MRBs configuration not available in the MCCH information, e.g., MBSBroadcastConfiguration Message, and/or UE 208 is no longer interested to receive broadcast MBS session. RRC layer indicates to the SDAP layer for release of the pertinent SDAP entity or entities.

The various actions in method 800 may be performed in the order presented, in a different order or simultaneously. Further, in some embodiments, some actions listed in FIG. 8 may be omitted.

An example of the specification for the SDAP entity establishment for the broadcast MRB is provided as follows:
Upon a broadcast MRB establishment, the UE shall:
1> establish a PDCP entity and an RLC entity in accordance with MRB-InfoBroadcast for this broadcast MRB included in the MBSBroadcastConfiguration message and the configuration specified in 9.1.1.7;
1> configure the MAC layer in accordance with the mtch-SchedulingInfo (if included);
1> configure the physical layer in accordance with the mbs-SessionInfoList, searchSpaceMTCH, and pdsch-ConfigMTCH, applicable for the broadcast MRB;
1> receive DL-SCH on the cell where the MBSBroadcastConfiguration message was received for the established broadcast MRB using g-RNTI and mtch-SchedulingInfo (if included) in this message for this MBS broadcast service;
1> if an SDAP entity with the received tmgi (i.e. mbs-SessionId) does not exist:
   2> establish an SDAP entity as specified in TS 37.324 [24] clause 5.1.1.
   2> indicate the establishment of the user plane resources for the tmgi (i.e. mbs-SessionId) to upper layers.

An example of the specification for the SDAP entity release for the broadcast MRB is provided as follows:
Upon broadcast MRB release for MBS broadcast service, the UE shall:
1> release the PDCP entity, RLC entity as well as the related MAC and physical layer configuration;
1> if the SDAP entity associated with the corresponding tmgi (i.e. mbs-SessionId) has no associated MRB:
   2> release the SDAP entity, as specified in TS 37.324 [24] clause 5.1.2;
   2> indicate the release of the user plane resources for the tmgi (i.e. mbs-SessionId) to upper layers.

### MBS Radio Bearer Type Change:

In an embodiment, when the MBS radio bearer type change is signalled by network to the UE 208, e.g., for switching across PTM, PTP, and PTM+PTP delivery modes during normal access or during mobility scenarios like handover, the UE 208 undertakes at least one of establishment, release, modify and retaining of SDAP entity or entities for the pertinent MRBs. For example, for the relevant TMGI or MBS session ID, one or more new MRBs can be added, one or more exisiting MRBs can be released, one or more MRBs can be modified through the MBS Radio Bearer Type Change.

### Change of QoS flows mapping and pertinent MRBs:

In an embodiment, the UE 208 undertakes at least one of establishment, release, and retaining of SDAP entity or entities for the pertinent MRBs when there is change of QoS flows mapping and pertinent MRBs. For example, network may change the QoS flows mapping to MRBs, add/remove one or more QoS flows for the MBS session etc. This can be signalled through RadioBearerConfig in the RRC reconfiguration message by the network. RRC layer indicates to the SDAP layer for the establishment, or release of the pertinent SDAP entity or entities.

The embodiments disclosed herein can be implemented through at least one software program running on at least one hardware device and performing network management functions to control the elements. The elements shown in Fig. 2 can be at least one of a hardware device, or a combination of hardware device and software module.

FIG. 9 illustrates a block diagram of a terminal (or a user equipment (UE)), according to embodiments of the present disclosure.

As shown in FIG. 9, the UE according to an embodiment may include a transceiver 910, a memory 920, and a processor 930. The transceiver 910, the memory 920, and the processor 930 of the UE may operate according to a communication method of the UE described above. However, the components of the UE are not limited thereto. For example, the UE may include more or fewer components than those described above. In addition, the processor 930, the transceiver 910, and the memory 920 may be implemented as a single chip. Also, the processor 930 may include at least one processor.

The transceiver 910 collectively refers to a UE receiver and a UE transmitter, and may transmit/receive a signal to/from a base station or a network entity. The signal transmitted or received to or from the base station or a network entity may include control information and data. The transceiver 910 may include a RF transmitter for up-converting and amplifying a frequency of a transmitted signal, and a RF receiver for amplifying low-noise and down-converting a frequency of a received signal. However, this is only an example of the transceiver 910 and components of the transceiver 910 are not limited to the RF transmitter and the RF receiver.

Also, the transceiver 910 may receive and output, to the processor 930, a signal through a wireless channel, and transmit a signal output from the processor 930 through the wireless channel.

The memory 920 may store a program and data required for operations of the UE. Also, the memory 920 may store control information or data included in a signal obtained by the UE. The memory 920 may be a storage medium, such as read-only memory (ROM), random access memory (RAM), a hard disk, a CD-ROM, and a DVD, or a combination of storage media.

The processor 930 may control a series of processes such that the UE operates as described above. For example, the transceiver 910 may receive a data signal including a control signal transmitted by the base station or the network entity, and the processor 930 may determine a result of receiving the control signal and the data signal transmitted by the base station or the network entity.

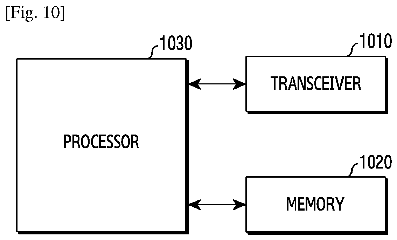

FIG. 10 illustrates a block diagram of a base station, according to embodiments of the present disclosure.

As shown in FIG. 10, the base station according to an embodiment may include a transceiver 1010, a memory 1020, and a processor 1030. The transceiver 1010, the memory 1020, and the processor 1030 of the base station may operate according to a communication method of the base station described above. However, the components of the base station are not limited thereto. For example, the base station may include more or fewer components than those described above. In addition, the processor 1030, the transceiver 1010, and the memory 1020 may be implemented as a single chip. Also, the processor 1030 may include at least one processor.

The transceiver 1010 collectively refers to a base station receiver and a base station transmitter, and may transmit/receive a signal to/from a terminal or a network entity. The signal transmitted or received to or from the terminal or a network entity may include control information and data. The transceiver 1010 may include a RF transmitter for up-converting and amplifying a frequency of a transmitted signal, and a RF receiver for amplifying low-noise and down-converting a frequency of a received signal. However, this is only an example of the transceiver 1010 and components of the transceiver 1010 are not limited to the RF transmitter and the RF receiver.

Also, the transceiver 1010 may receive and output, to the processor 1030, a signal through a wireless channel, and transmit a signal output from the processor 1030 through the wireless channel.

The memory 1020 may store a program and data required for operations of the base station. Also, the memory 1020 may store control information or data included in a signal obtained by the base station. The memory 1020 may be a storage medium, such as read-only memory (ROM), random access memory (RAM), a hard disk, a CD-ROM, and a DVD, or a combination of storage media.

The processor 1030 may control a series of processes such that the base station operates as described above. For example, the transceiver 1010 may receive a data signal including a control signal transmitted by the terminal, and the processor 1030 may determine a result of receiving the control signal and the data signal transmitted by the terminal.

The methods according to the embodiments described in the claims or the detailed description of the present disclosure may be implemented in hardware, software, or a combination of hardware and software.

When the electrical structures and methods are implemented in software, a computer-readable recording medium having one or more programs (software modules) recorded thereon may be provided. The one or more programs recorded on the computer-readable recording medium are configured to be executable by one or more processors in an electronic device. The one or more programs include instructions to execute the methods according to the embodiments described in the claims or the detailed description of the present disclosure.

In the afore-described embodiments of the present disclosure, elements included in the present disclosure are expressed in a singular or plural form according to the embodiments. However, the singular or plural form is appropriately selected for convenience of explanation and the present disclosure is not limited thereto. As such, an element expressed in a plural form may also be configured as a single element, and an element expressed in a singular form may also be configured as plural elements.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of embodiments, those skilled in the art will recognize that the embodiments herein can be practiced with modification within the scope of the embodiments as described herein.

## Claims

1. A method performed by a user equipment, UE (208), in a wireless communication system, the method comprising:
receiving, from a base station, a radio resource control, RRC, reconfiguration message including configuration information for an addition of a multicast multicast/broadcast service, MBS, radio bearer, MRB, wherein the configuration information includes first information on an identity of the multicast MRB, and second information on a temporary mobile group identity, TMGI, corresponding to the multicast MRB; and
establishing a service data adaptation protocol, SDAP, entity associated with the multicast MRB corresponding to the TMGI,
wherein, in case that the UE transitions to an RRC idle state, the SDAP entity associated with the multicast MRB is released and an SDAP entity associated with a broadcast MRB is not released.

2. The method of claim 1, wherein the addition of the multicast MRB is performed based on the configuration information.

3. The method of claim 1, further comprising:
releasing an SDAP entity which has no associated multicast MRB based on the configuration information; and
indicating a release of user plane resources for an MBS multicast session associated with the SDAP entity which has no associated multicast MRB to an upper layer.

4. The method of claim 1, wherein an SDAP service data unit, SDU, is retrieved from an SDAP protocol data unit, PDU, received via the multicast MRB.

5. The method of claim 1, further comprising:
in case that the RRC reconfiguration message includes information on a full configuration, releasing an SDAP entity with a configured TMGI, and a multicast MRB associated with the configured TMGI.

6. The method of claim 1, further comprising:
in case that the RRC reconfiguration message includes information on a full configuration, releasing user plane resources associated with a configured TMGI and not included in the configuration information.

7. The method of claim 6, further comprising:
in case that a release of the user plane resources is based on reconfiguration with sync, indicating the release of the user plane resources to an upper layer after the reconfiguration succeeds, and
in case that the release of the user plane resources is not based on the reconfiguration with sync, indicating the release of the user plane resources to the upper layer immediately.

8. A user equipment, UE (208), in a wireless communication system, the UE comprising:
a transceiver; and
a controller coupled with the transceiver and configured to:
receive, from a base station, a radio resource control, RRC, reconfiguration message including configuration information for an addition of a multicast multicast/broadcast service, MBS, radio bearer, MRB, wherein the configuration information includes first information on an identity of the multicast MRB, and second information on a temporary mobile group identity, TMGI, corresponding to the multicast MRB, and
establish a service data adaptation protocol, SDAP, entity associated with the multicast MRB corresponding to the TMGI,
wherein, in case that the UE transitions to an RRC idle state, the SDAP entity associated with the multicast MRB is released and an SDAP entity associated with a broadcast MRB is not released.

9. The UE (208) of claim 8, wherein the addition of the multicast MRB is performed based on the configuration information.

10. The UE (208) of claim 8, wherein the controller is further configured to:
release an SDAP entity which has no associated multicast MRB based on the configuration information, and
indicate a release of user plane resources for an MBS multicast session associated with the SDAP entity which has no associated multicast MRB to an upper layer.

11. The UE (208) of claim 8, wherein an SDAP service data unit, SDU, is retrieved from an SDAP protocol data unit, PDU, received via the multicast MRB.

12. The UE (208) of claim 8, wherein the controller is further configured to:
in case that the RRC reconfiguration message includes information on a full configuration, release an SDAP entity with a configured TMGI, and a multicast MRB associated with the configured TMGI.

13. The UE (208) of claim 8, wherein the controller is further configured to:
in case that the RRC reconfiguration message includes information on a full configuration, release user plane resources associated with a configured TMGI and not included in the configuration information.

## Patentansprüche

1. Verfahren, das durch ein Benutzergerät, UE (208), in einem drahtlosen Kommunikationssystem durchgeführt wird, wobei das Verfahren Folgendes umfasst:
Empfangen, von einer Basisstation, einer Funkressourcensteuerungs-, RRC, - Rekonfigurationsnachricht, die Konfigurationsinformationen für eine Hinzufügung eines Multicast-Multicast/Broadcast-Dienst-, MBS, -Funkträgers, MRB, beinhaltet, wobei die Konfigurationsinformationen erste Informationen über eine Identität des Multicast-MRB und zweite Informationen über eine temporäre Mobilfunkgruppenidentität, TMGI, beinhalten, die dem Multicast-MRB entspricht; und
Einrichten einer Dienstdatenanpassungsprotokoll-, SDAP, -Einheit, die mit dem Multicast-MRB assoziiert ist, der der TMGI entspricht,
wobei, falls das UE in einen RRC-Ruhezustand übergeht, die SDAP-Einheit, die mit dem Multicast-MRB assoziiert ist, freigegeben wird und eine SDAP-Einheit, die mit einem Broadcast-MRB assoziiert ist, nicht freigegeben wird.

2. Verfahren nach Anspruch 1, wobei die Hinzufügung des Multicast-MRB basierend auf den Konfigurationsinformationen durchgeführt wird.

3. Verfahren nach Anspruch 1, ferner umfassend:
Freigeben einer SDAP-Einheit, die keinen assoziierten Multicast-MRB aufweist, basierend auf den Konfigurationsinformationen; und
Angeben einer Freigabe von Benutzerebenenressourcen für eine MBS-Multicast-Sitzung, die mit der SDAP-Einheit assoziiert ist, die keinen assoziierten Multicast-MRB aufweist, an eine höhere Schicht.

4. Verfahren nach Anspruch 1, wobei eine SDAP-Dienstdateneinheit, SDU, aus einer SDAP-Protokolldateneinheit, PDU, abgerufen wird, die über den Multicast-MRB empfangen wird.

5. Verfahren nach Anspruch 1, ferner umfassend:
falls die RRC-Rekonfigurationsnachricht Informationen über eine vollständige Konfiguration beinhaltet, Freigeben einer SDAP-Einheit mit einer konfigurierten TMGI und eines Multicast-MRB, der mit der konfigurierten TMGI assoziiert ist.

6. Verfahren nach Anspruch 1, ferner umfassend:
falls die RRC-Rekonfigurationsnachricht Informationen über eine vollständige Konfiguration beinhaltet, Freigeben von Benutzerebenenressourcen, die mit einer konfigurierten TMGI assoziiert sind und nicht in den Konfigurationsinformationen enthalten sind.

7. Verfahren nach Anspruch 6, ferner umfassend:
falls eine Freigabe der Benutzerebenenressourcen auf einer Rekonfiguration mit Synchronisation basiert, Angeben der Freigabe der Benutzerebenenressourcen an eine höhere Schicht, nachdem die Rekonfiguration erfolgreich war, und
falls die Freigabe der Benutzerebenenressourcen nicht auf der Rekonfiguration mit Synchronisation basiert, unmittelbares Freigeben der Benutzerebenenressourcen an die höhere Schicht.

8. Benutzergerät, UE (208), in einem drahtlosen Kommunikationssystem, wobei das UE Folgendes umfasst:
einen Sendeempfänger; und
eine Steuerung, die mit dem Sendeempfänger gekoppelt ist und konfiguriert ist zum:
Empfangen, von einer Basisstation, einer Funkressourcensteuerungs-, RRC, - Rekonfigurationsnachricht, die Konfigurationsinformationen für eine Hinzufügung eines Multicast-Multicast/Broadcast-Dienst-, MBS, -Funkträgers, MRB, beinhaltet, wobei die Konfigurationsinformationen erste Informationen über eine Identität des Multicast-MRB und zweite Informationen über eine temporäre Mobilfunkgruppenidentität, TMGI, beinhalten, die dem Multicast-MRB entspricht, und
Einrichten einer Dienstdatenanpassungsprotokoll-, SDAP, -Einheit, die mit dem Multicast-MRB assoziiert ist, der der TMGI entspricht,
wobei, falls das UE in einen RRC-Ruhezustand übergeht, die SDAP-Einheit, die mit dem Multicast-MRB assoziiert ist, freigegeben wird und eine SDAP-Einheit, die mit einem Broadcast-MRB assoziiert ist, nicht freigegeben wird.

9. UE (208) nach Anspruch 8, wobei die Hinzufügung des Multicast-MRB basierend auf den Konfigurationsinformationen durchgeführt wird.

10. UE (208) nach Anspruch 8, wobei die Steuerung ferner konfiguriert ist zum:
Freigeben einer SDAP-Einheit, die keinen assoziierten Multicast-MRB aufweist, basierend auf den Konfigurationsinformationen, und
Angeben einer Freigabe von Benutzerebenenressourcen für eine MBS-Multicast-Sitzung, die mit der SDAP-Einheit assoziiert ist, die keinen assoziierten Multicast-MRB aufweist, an eine höhere Schicht.

11. UE (208) nach Anspruch 8, wobei eine SDAP-Dienstdateneinheit, SDU, aus einer SDAP-Protokolldateneinheit, PDU, abgerufen wird, die über den Multicast-MRB empfangen wird.

12. UE (208) nach Anspruch 8, wobei die Steuerung ferner konfiguriert ist zum:
falls die RRC-Rekonfigurationsnachricht Informationen über eine vollständige Konfiguration beinhaltet, Freigeben einer SDAP-Einheit mit einer konfigurierten TMGI und eines Multicast-MRB, der mit der konfigurierten TMGI assoziiert ist.

13. UE (208) nach Anspruch 8, wobei die Steuerung ferner konfiguriert ist zum:
falls die RRC-Rekonfigurationsnachricht Informationen über eine vollständige Konfiguration beinhaltet, Freigeben von Benutzerebenenressourcen, die mit einer konfigurierten TMGI assoziiert sind und nicht in den Konfigurationsinformationen enthalten sind.

## Revendications

1. Procédé exécuté par un équipement utilisateur, UE, (208) dans un système de communication sans fil, le procédé comprenant :
recevoir, d'une station de base, un message de reconfiguration de commande de ressources radio, RRC, comprenant des informations de configuration pour un ajout d'un support radio, MRB, de service de diffusion/multidiffusion-multidiffusion, MBS, les informations de configuration comprenant des premières informations sur une identité du MRB de multidiffusion, et des deuxièmes informations sur une identité de groupe mobile temporaire, TMGI, correspondant au MRB de multidiffusion ; et
établir une entité de protocole d'adaptation de données de service, SDAP, associée au MRB de multidiffusion correspondant à la TMGI,
dans lequel, si l'UE passe à un état inactif RRC, l'entité SDAP associée au MRB de multidiffusion est libérée, et une entité SDAP associée à un MRB de diffusion n'est pas libérée.

2. Procédé de la revendication 1, dans lequel l'ajout du MRB de multidiffusion est effectué en se basant sur les informations de configuration.

3. Procédé de la revendication 1, comprenant en outre :
libérer une entité SDAP à laquelle n'est associé aucun MRB de multidiffusion, en se basant sur les informations de configuration ; et
indiquer une libération des ressources de plan utilisateur pour une session de multidiffusion MBS associée à l'entité SDAP, à laquelle n'est associée aucun MRB de multidiffusion vers une couche supérieure.

4. Procédé de la revendication 1, dans lequel une unité de données de service, SDU, SDAP est extraite d'une unité de données de protocole, PDU, SDAP reçue via le MRB de multidiffusion.

5. Procédé de la revendication 1, comprenant en outre :
dans le cas où le message de reconfiguration RRC comprend des informations d'une configuration complète, libérer une entité SDAP dotée d'une TMGI configurée, ainsi qu'un MRB de multidiffusion associé à la TMGI configurée.

6. Procédé de la revendication 1, comprenant en outre :
dans le cas où le message de reconfiguration RRC comprend des informations d'une configuration complète, libérer des ressources de plan utilisateur associées à une TMGI configurée et non incluses dans les informations de configuration.

7. Procédé de la revendication 6, comprenant en outre :
dans le cas où une libération des ressources de plan utilisateur est basé sur une reconfiguration avec synchronisation, indiquer la libération des ressources de plan utilisateur vers une couche supérieure après la reconfiguration réussie, et
dans le cas où la libération des ressources de plan utilisateur n'est pas basé sur une reconfiguration avec synchronisation, indiquer la libération des ressources de plan utilisateur immédiatement vers la couche supérieure.

8. Équipement utilisateur, UE (208), dans un système de communication sans fil, l'UE comprenant :
un émetteur-récepteur ; et
une commande couplée à l'émetteur-récepteur et configurée pour :
recevoir, d'une station de base, un message de reconfiguration de commande de ressources radio, RRC, comprenant des informations de configuration pour un ajout d'un support radio, MRB, de service de diffusion/multidiffusion-multidiffusion, MBS, les informations de configuration comprenant des premières informations sur une identité du MRB de multidiffusion, et des deuxièmes informations sur une identité de groupe mobile temporaire, TMGI, correspondant au MRB de multidiffusion, et
établir une entité de protocole d'adaptation de données de service, SDAP, associée au MRB de multidiffusion correspondant à la TMGI,
dans lequel, si l'UE passe à un état inactif RRC, l'entité SDAP associée au MRB de multidiffusion est libérée, et une entité SDAP associée à un MRB de diffusion n'est pas libérée.

9. UE (208) de la revendication 8, dans lequel l'ajout du MRB de multidiffusion est effectué en se basant sur les informations de configuration.

10. UE (208) de la revendication 8, dans lequel la commande est en outre configurée pour :
libérer une entité SDAP à laquelle n'est associé aucun MRB de multidiffusion, en se basant sur les informations de configuration, et
indiquer une libération des ressources de plan utilisateur pour une session de multidiffusion MBS associée à l'entité SDAP, à laquelle n'est associée aucun MRB de multidiffusion vers une couche supérieure.

11. UE (208) de la revendication 8, dans lequel une unité de données de service, SDU, SDAP est extraite d'une unité de données de protocole, PDU, SDAP reçue via le MRB de multidiffusion.

12. UE (208) de la revendication 8, dans lequel la commande est en outre configurée pour :
dans le cas où le message de reconfiguration RRC comprend des informations d'une configuration complète, libérer une entité SDAP dotée d'une TMGI configurée, ainsi qu'un MRB de multidiffusion associé à la TMGI configurée.

13. UE (208) de la revendication 8, dans lequel la commande est en outre configurée pour :
dans le cas où le message de reconfiguration RRC comprend des informations d'une configuration complète, libérer des ressources de plan utilisateur associées à une TMGI configurée et non incluses dans les informations de configuration.
